# EUROPÄISCHE PATENTSCHRIFT

(11) **EP 3 746 294 B1**
(45) Veröffentlichungstag und Bekanntmachung des Hinweises auf die Patenterteilung: **06.07.2022**
(21) Anmeldenummer: 19701126.5
(22) Anmeldetag: 25.01.2019
(51) Int. Cl.: B32B 15/095, B32B 27/40, B32B 15/18, B32B 15/20, C08G 18/48, C08G 18/72

(54) **VERBUNDELEMENT MIT VERBESSERTEN EIGENSCHAFTEN**
COMPOSITE ELEMENT HAVING IMPROVED PROPERTIES
ÉLÉMENT COMPOSITE AUX PROPRIÉTÉS AMÉLIORÉES

(30) Priorität: 31.01.2018 EP 18154345
(43) Veröffentlichungstag der Anmeldung: 09.12.2020
(73) Patentinhaber: BASF SE, 67056 Ludwigshafen am Rhein (DE)
(72) Erfinder: GRIESER-SCHMITZ, Christof, 49448 Lemfoerde (DE); KAMM, Andre, 49448 Lemfoerde (DE)
(74) Vertreter: BASF IP Association
(86) Internationale Anmeldenummer: PCT/EP2019/051871
(87) Internationale Veröffentlichungsnummer: WO 2019/149634

(56) Entgegenhaltungen:
- EP-B1- 1 094 938

## Beschreibung

Gegenstand der vorliegenden Erfindung ist ein Verbundelement, das in tragenden Konstruktionen verwendet wird, basierend auf zwei Metallschichten, die durch Polyurethan verbunden sind, sowie deren Herstellung und Verwendung.

Für die Konstruktion von Schiffen, beispielsweise Schiffsrümpfen und Laderaumabdeckungen, Brücken oder Hochhäusern müssen Konstruktionsteile verwendet werden, die erheblichen Belastungen durch äußere Kräfte standhalten können.

Solche Verbundelemente sind beispielsweise in Schutzrechten EP 0 938 410, EP 1 089 875, EP 1 094 938, EP 1 093 410, US 6,790,537, EP 1 240 010 and EP 1 315 761 beschrieben.

Ein Problem bei der Herstellung von Verbundelementen ist es, eine gute, gleichmäßige und blasenfreie Füllung der Lufträume zwischen den beiden Stahlplatten zu erreichen. Ferner müssen die Oberflächen der Platten gut benetzt werden und es muss eine ausreichend gute Haftung zwischen den Platten und der Polyurethanschicht hergestellt werden. Viele Polyurethane haben ein anderes Ausdehnungsverhalten als die verwendeten Platten, so dass es bei Temperaturschwankungen zur Ablösung des Polyurethans von den Platten kommen kann. Zudem müssen die für die Herstellung des Polyurethans verwendeten Reaktionsprodukte so ausgewählt werden, dass sie sich bei der Aushärtung nicht so stark zusammenziehen, dass es zur Ablösung von den Platten kommt. Gleichzeitig müssen die erfindungsgemäßen Konstruktionsteile hohen mechanischen und dynamischen Belastungen standhalten.

Überraschenderweise können diese Probleme gelöst werden mit einem Verbundelement gemäß dem Hauptanspruch 1.

Das Metall ist bevorzugt ausgewählt aus der Gruppe Aluminium, Eisen, Kupfer, Messing und Stahl. Bevorzugt ist das Metall Stahl. Der Stahl ist üblicher Stahl, gehärteter Stahl, Chrom-Vanadium-Stahl, witterungsbeständiger Stahl oder ein veredelter, nichtrostender Stahl. Vanadium-Stahl wird bevorzugt für Leichtbau-Brücken verwendet. Nichtrostender Stahl wird überall dort eingesetzt, wo Korrosion eine Rolle spielt. Kupfer und Messung sowie deren Legierungen, z.B. Bronze findet bevorzugt in der Gestaltung von Gebäuden Verwendung. Gehärtetes Aluminium wird für gewichtssparende gepanzerte Fahrzeuge und entsprechende Schaltboxen, insbesondere für den Militärbereich verwendet.

Die Wahl geeigneter Materialien hängt von den Anforderungen ab, wie Festigkeit, Steifigkeit, Korrosionsbeständigkeit, Resistenz gegen Chemikalien, Ermüdungswiderstand, Dehnbarkeit, Bruchfestigkeit, Verhalten bei Hitze oder Kälte, wie auch das ästhetische Erscheinungsbild, der beabsichtigten Beschichtung, Schlagfestigkeit sowie der Schweissbarkeit.

Das im Folgenden beschriebene Polyurethan ist für den Verbund mit allen Materialen geeignet, ganz besonders kommen die positiven Eigenschaften jedoch mit Stahl zur Wirkung, insbesondere mit nichtrostendem Stahl als äußerem Schichtmaterial. In einer bevorzugten Ausführungsform ist das Verbundelement eine Platte.

Unter kompakten Polyurethanen wird im Rahmen dieser Erfindung Polyurethan verstanden, dass ohne Zusatz von Treibmitteln hergestellt wurde. Gegebenenfalls können die verwendeten Polyole jedoch Spuren von Restwasser enthalten. Bevorzugt ist der Restwassergehalt unter 0,5 Gew.-%, besonders bevorzugt von 0 bis 0,1 Gew.-%, und besonders bevorzugt von 0 bis 0,03 Gew.-%, bezogen auf das Gesamtgewicht der Reaktionsmischung. Die Dichte von kompakten Polyurethan ist vorzugsweise größer als 900 g/Liter, besonders bevorzugt größer 950 g/Liter und insbesondere größer 1000 g/Liter.

Das Polyetherpolyol (b1) ist mit 50 Gew.-% bis 95 Gew.-% in der Mischung enthalten, bevorzugt mit 55 Gew.-% bis 90 Gew.-% und besonders bevorzugt mit 60 Gew.-% bis 85 Gew.-%. Gleichzeitig, hat das Polyetherpolyol (b1) eine mittlere Funktionalität 2,2 bis 2,7 und besonders bevorzugt von 2,4 bis 2,6. Das Polyetherpolyol (b1) hat gleichzeitig ein zahlenmittleres Molekulargewicht zwischen 3,0 × 10³ g/Mol und 7,0 × 10³ g/Mol, bevorzugt zwischen 4,0 × 10³ g/Mol und 6,0 × 10³ g/Mol.

Das Polyetherpolyol (b2) ist bevorzugt mit 5 Gew.-% bis 50 Gew.-% in der Mischung enthalten.

Die mittlere Funktionalität des Polyetherpolyols (b2) beträgt 2,5 bis 3,5 und besonders bevorzugt 2,9 bis 3,1.

Das zahlenmittlere Molekulargewicht des Polyetherpolyols (b2) ist zwischen, 0,15 × 10³g/Mol und 2,0 × 103 g/Mol, bevorzugt zwischen 0,15 × 10³ g/Mol und 1,0 × 10³ g/Mol, und besonders bevorzugt zwischen 0,15 × 10³ g/Mol und 0,6 × 10³ g/Mol.

Die aufgeführten Gewichtsangaben der einzelnen Polyetherpolyole (b1) beziehungsweise (b2) beziehen sich auf das Gesamtgewicht der Mischung aus den Polyetherpolyolen (b1) und (b2) und addieren sich in einer bevorzugten Ausführungsform zu 100 Gew.-%. In einer anderen bevorzugten Ausführungsform kann zumindest ein weiteres Polyol enthalten sein.

Bevorzugt ist die Differenz des zahlenmittleren Molekulargewichts der Polyetherpolyole (b1) und (b2) zumindest 0,5 × 10³ g/Mol, weiter bevorzugt zumindest 1,0 × 10³ g/Mol, noch weiter bevorzugt zumindest 2,0 × 10³ g/Mol, und besonders bevorzugt zumindest 3,5 × 10³ g/Mol.

In einer bevorzugten Ausführungsform ist in dem Verbundelement ein Kettenverlängerer enthalten. Als Kettenverlängerungsmittel werden Substanzen mit einem Molekulargewicht von vorzugsweise kleiner 150 g/mol, besonders bevorzugt von 60 g/mol bis 146 g/mol eingesetzt, wobei Kettenverlängerer mindestens zwei gegenüber Isocyanaten reaktive Wasserstoffatome aufweisen. Diese können bevorzugt einzeln oder in Form von Mischungen eingesetzt werden. Bevorzugte Beispiel sind aliphatische, cycloaliphatische und/oder araliphatische Diole mit 2 bis 8 Kohlenstoffatomen, bevorzugt Ethylenglykol, 1,3-Propandiol, 1,2- Dihydroxycyclohexan, 1,3-Dihydroxycyclohexan, 1,4-Dihydroxycyclohexan, Diethylenglykol, Dipropylenglykol und 1,4-Butandiol, 1,6-Hexandiol. Eine andere bevorzugte Ausführungsform ist eine Mischung aus Diolen mit 2 bis 8 Kohlenstoffatomen, bevorzugt mit 4 bis 6 Kohlenstoffatomen. Besonders bevorzugt enthält der Kettenverlängerer Dipropylenglykol und Butandiol.

Sofern zur Herstellung der Polyisocyanat-Polyadditionsprodukten Kettenverlängerungsmittel, Vernetzungsmittel oder Mischungen davon Anwendung finden, kommen diese bevorzugt in einer Menge von 0 Gew.-% bis 30 Gew.-%, vorzugsweise von 2 Gew.-% bis 20 Gew.-%, bezogen auf das Gewicht der insgesamt eingesetzten gegenüber Isocyanaten reaktiven Verbindungen (b), zum Einsatz.

Als Isocyanat aufweisende Verbindung kommen die an sich bekannten aliphatischen, cycloaliphatischen, araliphatischen und/oder aromatischen Isocyanate, bevorzugt Diisocyanate in Frage. Außerdem können Ester-, Harnstoff-, Allophanat-, Carbodiimid-, Uretdion und/oder Urethangruppen enthaltende Di- und/oder Polyisocyanate eingesetzt werden.

In einer bevorzugten Ausführungsform enthält die Isocyanatgruppen aufweisende Verbindung das Isocyanat 2,4'-, 2,2'- und/oder 4,4'-Diphenylmethandiisocyanat (MDI) und/oder Polyphenylpolymethlyen-polyisocyanat (PMDI), besonders bevorzugt Polyphenylpolymethlyen-polyisocyanat (PMDI).

Die Polyurethanzubereitung des beschriebenen Verbundelements hat eine Härte gemessen nach DIN 53505 bei Raumtemperatur von mehr als 45 Shore D, bevorzugt von mehr als 55 Shore D, besonders bevorzugt von mehr als 60 Shore D, sowie gleichzeitig eine Härte bei 100°C von mehr als 35 Shore D, bevorzugt mehr als 40 Shore D und ganz besonders bevorzugt von mehr als 45 Shore D.

In einer weiter bevorzugten Ausführungsform hat die Polyurethanzusammensetzung ein E-Modul nach DIN 53504 von mehr als 275 MPa im Bereich von -45° bis +50°C.

Die Adhäsion zwischen der Polyurethanzusammensetzung und den Metallteilen ist bevorzugt größer als 1, weiter bevorzugt größer als 2 und besonders bevorzugt größer als 4 MPa.

Die Reißdehnung nach DIN 53504 im Temperaturbereich zwischen -45 bis +50 °C der Polyurethanzusammensetzung ist bevorzugt größer als 10 %, weiter bevorzugt größer als 20 % und besonders bevorzugt größer als 30%.

Die Zugfestigkeit nach DIN 53504 der Polyurethanzusammensetzung ist bevorzugt größer als 10 MPa, weiter bevorzugt größer als 15 MPa und besonders bevorzugt größer als 20 MPa.

Die Druckfestigkeit der Polyurethanzusammensetzung ist bevorzugt größer als 8 MPa, weiter bevorzugt größer als 15 mPa und besonders bevorzugt größer als 20 MPa.

Weiter bevorzugt weist die Polyurethanzusammensetzung zumindest zwei der oben ausgeführten mechanischen Eigenschaften auf, weiter bevorzugt 3, weiter bevorzugt 4, noch weiter bevorzugt 5 und in einer besonderen Ausführungsform alle 6 der genannten Eigenschaften in den jeweils beschriebenen bevorzugten Bereichen.

Außerdem können zusätzlich zu den erfindungsgemäßen Polyetherpolyalkoholen aliphatische, araliphatische, cycloaliphatische und/oder aromatische Carbonsäuren zur Optimierung des Härtungsverlaufes bei der Herstellung der Polyurethanzusammensetzung eingesetzt werden. Bevorzugte derartige Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Rizinolsäure, Toluolsulfonsäure, Derivate der genannten Säuren, Isomere der genannten Säuren und beliebigen Mischungen der genannten Säuren. Der Gewichtsanteil dieser Säuren beträgt bevorzugt 0 Gew.-% bis 5 Gew.-%, bevorzugt 0,2 Gew.-% bis 2 Gew.-%, bezogen auf das Gesamtgewicht der Komponenten zur Herstellung der Polyurethanzusammensetzun.

Als Katalysatoren (c) können allgemein bekannte Verbindungen eingesetzt werden, die die Reaktion von Isocyanaten mit den gegenüber Isocyanaten reaktiven Verbindungen beschleunigen, wobei vorzugsweise ein Gesamtkatalysatorgehalt von 0,001 Gew.-% bis 15 Gew.-%, insbesondere von 0,05 Gew.-% bis 6 Gew.-%, bezogen auf das Gewicht der insgesamt eingesetzten gegenüber Isocyanaten reaktiven Verbindungen, verwendet wird. Bevorzugt werden folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetra-hydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Die Herstellung der Polyurethanzusammensetzung in der Gegenwart von Katalysatoren (c) auszuführen ist vorteilhaft, da es die Aushärtung und Haftung beschleunigt und verbessert.

Der Mischung der Komponenten für die Herstellung der Polyurethanzubereitung auf Basis der Polyisocyanat-Polyadditionsprodukte können gegebenenfalls weitere Füllstoffe, Hilfsmittel und/oder Zusatzstoffe zugegeben werden. Genannt seien beispielsweise Füllstoffe, oberflächenaktive Substanzen, Farbstoffe, Pigmente, Flammschutzmittel, Hydrolyseschutzmittel, fungistatisch und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Polyurethanzubereitung zu regulieren. Bevorzugte Beispiele sind Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden bevorzugt in Mengen von 0,01 Gew.-% bis 5 Gew.-%, bezogen auf 100 Gew.-% der insgesamt eingesetzten gegenüber Isocyanaten reaktiven Verbindungen (b), angewandt.

Beispiel für bevorzugte Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrom-propyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im Allgemeinen hat es sich als zweckmäßig erwiesen, 5 Gew.-% bis 50 Gew.-%, vorzugsweise 5 Gew.-% bis 25 Gew.-%, der genannten Flammschutzmittel, bezogen auf das Gewicht der insgesamt eingesetzten gegenüber Isocyanaten reaktiven Verbindungen, zu verwenden.

Füllstoffe, insbesondere verstärkend wirkende Füllstoffe sind übliche organischen und anorganischen Füllstoffe, Verstärkungsmittel, Beschwerungsmittel, Mittel zur Verbesserung des Abriebverhaltens, Beschichtungsmittel usw. zu verstehen. Bevorzugte Beispiel für Füllstoffe sind anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Alumini-umoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe sind beispielsweise bevorzugt Kohle, Melamin, Kollophonium, Cyclopentadienylharze und Pfropfpolymerisate sowie Cellulosefasern, Polyamid-Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung der Polyurethanzusammensetzung 10 Gew.-% bis 70 Gew.-% Füllstoffe, bezogen auf das Gewicht der gesamten Polyurethanzusammensetzung ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so gewählt, dass das Eintragen der Komponenten zur Herstellung der Polyurethanzusammensetzung in den Raum zwischen die bevorzugt vorbehandelte Metalloberflächen nicht behindert wird.

Besonders bevorzugt weisen die Füllstoffe eine Partikelgröße von weniger als 0,5 mm auf.

Die Füllstoffe werden bevorzugt der Polyolkomponente zugemischt.

Die Füllstoffe dienen bevorzugt dazu den im Vergleich beispielsweise zum Stahl größeren thermischen Ausdehnungskoeffizient der Polyisocyanat-Polyadditionsprodukte zu verringern und damit den Ausdehnungskoeffizienten der Polyurethanzusammensetzung dem des Stahls anzupassen. Dies ist für einen nachhaltig festen Verbund, d.h. Haftung zwischen der Polyurethanzusammensetzung und den Metalloberflächen, besonders vorteilhaft, da damit geringere Spannungen zwischen den Schichten bei thermischer Belastung auftreten.

Das Gewicht der Polyurethanzusammensetzungen wird gleichgesetzt mit dem Gesamtgewicht aller zur Herstellung der Polyurethanzusammensetzung eingesetzten Komponenten.

Zur Herstellung der Polyurethanzusammensetzung werden die Isocyanate und die gegenüber Isocyanaten reaktiven Verbindungen in solchen Mengen zur Umsetzung gebracht, dass das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one-shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Katalysatoren (c) und/oder Hilfs- und/oder Zusatzstoffe sowie Füllstoffe (d) in der Komponente (A) zu vereinigen und bevorzugt innig miteinander zu vermischen und als Komponente (B) die Isocyanate zu verwenden.

Die Ausgangskomponenten werden üblicherweise bei einer Temperatur von 0 °C bis 100°C, vorzugsweise von 20°C bis 60°C, gemischt und wie bereits beschrieben in den Raum zwischen den bevorzugt vorbehandelten Metalloberflächen eingebracht. Die Vermischung kann mechanisch mittels eines Rührers oder einer Rührschnecke oder Gegenstromvermischung bei Hochdruckverarbeitung durchgeführt werden. Die Reaktionstemperatur, d.h. die Temperatur, bei der die Umsetzung erfolgt, beträgt üblicherweise über 20 °C, bevorzugt 50 °C bis 150 °C. Dies wird vorzugweise dadurch erreicht, dass die Metalloberflächen vor und/oder während des Eintrags des Materials beheizt werden. Geeignete Methoden zum Erwärmen der Metalloberflächen sind dem Fachmann bekannt. Exemplarisch seien Beflammen oder induktive Verfahren genannt.

Ein weiterer Gegenstand der Erfindung ist ein Verfahren zur Herstellung der genannten Verbundelemente wobei man
(a) die mindestens zwei Isocyanatgruppen enthaltende Verbindung mit
(b) Polyetherpolyol, wobei das Polyetherpolyol (b) eine Mischung ist, die zumindest die Bestandteile Polyetherpolyol (b1) und Polyetherpolyol (b2) enthält,
   gegebenenfalls in Gegenwart von
(c) Katalysator und/oder
(d) Hilfs- und/oder Zusatzstoffen und/oder
(e) Kettenverlängerer vermischt und in Kontakt mit den Metallschichten aushärten lässt. So kommt es zu der für den Verbund wichtigen dauerhaften Haftung zwischen Metallflächen und Polyurethan.

Jede Mischung, die die für die Herstellung der Polurethanzusammensetzung verwendeten Komponenten (a), (b), gegebenenfalls (c) (d) und (e) enthält wir auch als Reaktionsmischung bezeichnet.

Der Wassergehalt in der Reaktionsmischung enthaltend die Komponenten (a), (b) und gegebenenfalls (c) (d) und/oder (e) beträgt bevorzugt zwischen 0 Gew.-% und 0,03 Gew.-%, bezogen auf das Gewicht der Reaktionsmischung. Der Wassergehalt insbesondere in der Polyether-Komponente (b) kann beispielsweise durch Destillation so eingestellt werden, dass der oben genannte Wert in der Reaktionsmischung erreicht wird. Das Wasser führt zur Gasbildung und damit Blasenbildung, die in bevorzugten Ausführungsformen vermieden werden soll.

Daher wird in einer anderen bevorzugten Ausführungsform der Reaktionsmischung eine Substanz zuzugeben, die Wasser binden und damit eine Treibreaktion verhindert. Beispiele für bevorzugte derartige Substanzen sind Molekularsiebe, Bevorzugte Molekularsiebe sind Silikate und Oxazolidine, die bevorzugt in fein verteilter Form verwendet werden. Diese Substanzen werden bevorzugt in Mengen von 0,05 Gew.-%, bis 5 Gew.-%, bezogen auf das Gewicht der Reaktionsmischung, bevorzugt bezogen auf die Komponente (b), zugesetzt.

Die socyanatgruppen enthaltende Verbindung (a hat einen NCO-Gehalt von 20 % bis 50 %, bevorzugt von 20 % bis 40 % und weiter bevorzugt von 20 % bis 35 % und besonders bevorzugt von 20 % bis 32 %.

In einer anderen bevorzugten Ausführungsform der beschriebenen Verfahren hat die Mischung aus den Polyetherpolyolen (b1) und (b2) ggf. enthaltend (c) Katalysator, (d) Hilf- und/oder Zusatzstoffe und/oder Kettenverlängerer (e) eine Viskosität von weniger als 6,0 × 10³ mPas, bevorzugt weniger als 5,0 × 10³ mPas und besonders bevorzugt von weniger als 4,0 × 10³ mPas besitzt, gemessen nach DIN 53019 bei 23°C.

In einer bevorzugten Ausführungsform des Verfahrens ist die Isocyanatgruppen enthaltende Verbindung (a) das Additionsprodukt aus Diisocyanat und einem oder mehreren Polyol mit einem Molekulargewicht von 0,076 × 10³g/mol bis 2 × 10³g/mol, die bevorzugt Polyetherpolyole sind. In einer anderen bevorzugten Ausführungsform ist die Isocyanatgruppen enthaltende Verbindung Polyphenylpolymethlyenpolyisocyanat (PMDI). Ein bevorzugtes Polyphenylpolymethylenpolyisocyanat weist eine Viskosität zwischen 60 mPas bis 2500 mPas, bevorzugt zwischen 80 mPas und 750 mPas und ganz besonders bevorzugt eine Viskosität zwischen 100 mPas und 350 mPas bei 23°C gemessen nach DIN 53019 auf.

Um einen guten Verbund herzustellen ist es vorteilhaft die Oberfläche des Metalls vor dem Kontakt mit der Polyurethanzubereitung vorzubehandeln. Die Vorbehandlung wird bevorzugt direkt vor der Einbringung der Komponenten der Polyurethanzusammensetzung durchgeführt.

Bevorzugt werden die Oberflächen der Metallflächen, die mit der Polyurethanzubereitung in Kontakt stehen und die nach der Herstellung der Verbundelemente an der Polyurethanzubereitung haften, mit Sand bestrahlt. Dieses Sandstrahlen erfolgt nach üblichen Verfahren, bevorzugt mit Hochdruck.

Neben der Reinigung der Oberfläche wird diese durch das Sandstrahlen aufgeraut. Beides führt jeweils zu einer besseren Haftung der Polyurethanzubereitung auf der Metalloberfläche. Das Sandstrahlen erfolgt bevorzugt unmittelbar vor Einbringung der Komponenten zur Herstellung des Polyurethans. Weiterhin können auch Haftvermittler auf diesen Oberflächen aufgebracht werden, was die Verbindung zwischen Polyurethanzusammensetzung und dem Metall weiter verbessert.

Die bevorzugt vorbehandelten Metalloberflächen des Verbundelementes werden in geeigneter Anordnung, bevorzugt parallel zueinander, fixiert. Der Abstand wird so gewählt, dass der Raum zwischen den Metalloberflächen eine Dicke von 10 mm bis 100 mm aufweist. Die Fixierung der Metallteile erfolgt bevorzugt mit Abstandshaltern. Die offenen Ränder des Zwischenraumes zwischen dem Metall werden bevorzugt so abgedichtet, dass der Raum zwischen den bevorzugt vorbehandelten Metalloberflächen mit den Reaktionsprodukten der Polyurethanzusammensetzung befüllt werden kann, und ein Herausfließen dieser Komponenten verhindert wird. Das Abdichten erfolgt bevorzugt mit Kunststoff- oder Metallfolien und/oder Kunststoff oder Metallplatten, die in einer bevorzugten Ausführungsform gleichzeitig als Abstandshalter dienen können. Besonders geeignet ist ein Verfahren zum Befüllen, wie es in EP 1 755 886 beschrieben ist.

Die Befüllung des Raumes zwischen den bevorzugt behandelten Metallflächen erfolgt in Abhängigkeit der Geometrie so, dass Luftblasen, die die Haftung zwischen Metall und Polyurethanzusammensetzung verschlechtern würden und Keimzellen für Korrosion bilden, verhindert werden.

Das Befüllen des Raumes zwischen den bevorzugt vorbehandelten Metallflächen kann mit üblichen Fördereinrichtungen durchgeführt werden, beispielsweise Hoch- oder Niederdruckmaschinen, vorzugsweise Hochdruckmaschinen. Die Komponenten der Polyurethanzusammensetzung werden bevorzugt kontinuierlich zugeführt.

Die Förderleistung kann in Abhängigkeit des zu befüllenden Volumens variiert werden. Um eine homogene Durchhärtung der Polyurethanzusammensetzung zu gewährleisten, wird die Förderleistung und Fördereinrichtung für die Polyurethanzusammensetzung so gewählt, dass der zu befüllende Raum zwischen den Metallflächen innerhalb von 5 min bis 20 min befüllt wird.

In einem anderen bevorzugten Verfahren wird ein Haftvermittler bevorzugt nach dem Sandstrahlen auf die Metalloberfläche aufgetragen. Bevorzugt ist der Haftvermittler ausgewählt aus der Gruppe: Polyurethan, Polyurea, Polyisocyanurat, Epoxid oder Silan. Besonders bevorzugt sind Haftvermittler auf der Basis von Polyurethan da diese eine besonders gute Verbindung zur Metalloberfläche bilden.

Ein weiterer Gegenstand dieser Erfindung ist ein Verbundelement erhältlich durch eines der oben genannten Verfahren.

Noch ein weiterer Gegenstand der Erfindung ist die Verwendung der hierin beschriebenen Verbundelemente in Fahrzeugen, Schiffen, insbesondere in Deckaufbauten und Schiffsrümpfen, in Flugzeugen oder in Bauwerken, bevorzugt in Brücken oder Häusern. In einer bevorzugten Ausführungsform wird das Verbundelement als Boden, insbesondere in Hochhäusern verwendet. In einer anderen bevorzugten Ausführungsform stellt das Verbundelement einen Schutz gegen schnell fliegende Gegenstände dar.

Ein weiterer Gegenstand der Erfindung sind Fahrzeuge, Schiffe, Flugzeuge, oder Bauwerke, insbesondere Brücken und Hochhäuser, dort insbesondere Böden von bevorzugt Hochhäusern die ein hierin beschriebenes Verbundelemente enthalten.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

### Beispiele:

Einsatzstoffe:
- Poly 1:: Polyetherol hergestellt durch Alkoxylierung von Propylenglycol mit Propylenoxid und Ethylenoxid mit einer Funktionalität von 1,76 und einem Molekulargewicht von 3350 g/mol und einer OH-Zahl von 29,5 mg KOH/g
- Poly 2:: Polyetherol hergestellt durch Alkoxylierung von Saccharose, Glycerin mit Proyplenoxid und Ethylenoxid mit einer Funktionalität von 4,15 und einem Molekukargewicht von 5250 g/mol und einer OH-Zahl von 44 mg KOH/g
- Poly 3:: Polyetherol hergestellt durch Alkoxylierung von Ethylendiamin mit Proyplenoxid mit einer Funktionalität von 4 und einem Molekukargewicht von 300 g/mol und einer OH-Zahl von 750 mg KOH/g
- Poly 4:: Polyetherol hergestellt durch Alkoxylierung von Glycerin mit Proyplenoxid und Ethylenoxid mit einer Funktionalität von 2,49 und einem Molekukargewicht von 5170 g/mol und einer OH-Zahl von 27 mg KOH/g
- Poly 5:: Polyetherol hergestellt durch Alkoxylierung von Toluoldiamin mit Proyplenoxid mit einer Funktionalität von 3,9 und einem Molekukargewicht von 550 g/mol und einer OH-Zahl von 398 mg KOH/g
- Poly 6:: Polyetherol hergestellt durch Alkoxylierung von Trimethylolpropan mit Proyplenoxid mit einer Funktionalität von 3,0 und einem Molekukargewicht von 200 g/mol und einer OH-Zahl von 860 mg KOH/g
- KV 1:: Dipropylenglycol
- KV 2:: 1,4-Butandiol
- Zeo:: Zeolithpaste 50%ig in Rizinusöl
- DF:: Entschäumer Antischaummittel AF 9000
- IS01:: Lupranat MP 102 der Firma BASF Polyurethanes GmbH (Prepolymer basierend auf 4,4'MDI Prepolymer mit Polyetherpolyol mit einem NCO-Gehalt von 23% und einer Viskosität von 650 mPas bei 25°C)
- ISO2:: Lupranat M20S der Firma BASF Polyurethanes GmbH (Polymer-MDI) mit einem NCO-Gehalt von 31,5% und einer Viskosität von 210 mPas bei 25°C)
- ISO3:: Lupranat MP 105 der Firma BASF Polyurethanes GmbH (Prepolymer auf Basis von 4,4'-MDI, PMDI und Polyetherpolol) mit einem NCO-Gehalt von 28,5% und einer Viskosität von 120 mPas bei 25°C)
- ISO4:: ISO 136/26 der Firma BASF Polyurethanes GmbH (Prepolymer basieren auf 4,4'MDI und Polyetherpolyol mit einem NCO-Gehalt von 18% und einer Viskosität von 1200 mPas bei 25°C)
- ISO5:: ISO 137/28 der Firma BASF Polyurethanes GmbH (Prepolymer basierend auf 4,4'MDI und Polyetherpolyol mit einem NCO-Gehalt von 18% und einer Viskosität von 750 mPas bei 25°C)
- ISO6:: ISO 136/94 (Prepolymer basierend auf 4,4'MDI und Polyetherol) der Firma BASF Polyurethanes GmbH mit einem NCO-Gehalt von 5,8% und einer Viskosität von 5500 mPas bei 50°C
- ISO7:: Mischung aus 48,5% ISO4 und 51,5% ISO5

Zur Herstellung der Polyolmischung wurden zunächst die Bestandteile der Polyolkomponente (Polyole, Additive etc.) gemischt. Anschließend wurde die Polyolkomponente bei dem in der Tabelle angegeben Mischungsverhältnis mit dem angegebenen Isocyanat umgesetzt. Das Mischungsverhältnis wurde so gewählt, dass das Äquivalenzverhältnis von NCO-Gruppen der Isocyanate zur Summe der reaktiven Wasserstoffatome der gegenüber Isocyanaten reaktiven Verbindungen 1,09 zu 1 beträgt. Um die Härte bzw. das Speichermodul zu bestimmen, wurden Prüfkörper mit einer Dicke von 1 cm bzw. Prüfplatten mit einer Dicke von 2 mm hergestellt. Die Herstellung erfolgte wie folgt:

Die Temperatur der Polyolmischung und der Isocyanatkomponente betrug Raumtemperatur (25°C). Die einzige Ausnahme war die Isocyanatkomponente ISO 136/94. Diese wurde mit einer Temperatur von 50°C verarbeitet. Um die Prüfkörper herzustellen wurde eine entsprechende Menge an Polyolkomponente vorgelegt und die entsprechende Menge an Isocyanatkomponente zugesetzt. Die reaktive Mischung wurde dann 5 sec. 800 RPM und anschließend 55 sec. bei 1800 RPM mittels eines SpeedmixerTM der Firma Hauschild gemischt. Die homogen vermischte Reaktionsmischung wurde dann in entsprechend auf 100°C vorgeheizte Formen gegeben. Nach 1h bei 100°C wurde die Prüfkörper entformt.

Die Bestimmung der Härte des Materials erfolgte an den 1 cm dicken Platten. Hierzu wurden die Platten zunächst 7 Tage bei Raumtemperatur konditioniert. Die Härtemessung erfolgte analog der DIN 53505. Um die Härte bei 50°C und 100°C zu bestimmen, wurden die Materialien bei der entsprechenden Temperatur für 3 h in einem entsprechenden Ofen gelagert. Die Messung der Härte erfolgte dann direkt im Ofen bei der entsprechenden Temperatur, um ein Abkühlen des Materials zu vermeiden.

Die nachfolgenden Beispiele in der Tabelle 1 sollen den Effekt der erfindungsgemäßen Zusammensetzung verdeutlichen. Beispiel B1 stellt kein Ausführungsbeispiel der Erfindung dar.

**Tabelle 1:**

| | V1 | V2 | V3 | V4 | B1 |
|---|---|---|---|---|---|
| Poly 1 | 90 | 98 | | | |
| Poly 2 | 10 | | | | |
| Poly 3 | | 2 | 52,35 | | |
| Poly 4 | | | 45,00 | 57,50 | 57,50 |
| Poly 5 | | | | 40,00 | 40,00 |
| Zeo | | | 2,50 | 2,35 | 2,35 |
| DF | | | 0,15 | 0,15 | 0,15 |
| Iso 2 | X | X | | | X |
| Iso 6 | | | X | X | |
| Mischungsverhältnis 100 Polyol : X Iso | 8,8 | 12,1 | 578 | 255 | 46,9 |
| Viskosität Polyolmischung [mPas] | 920 | 944 | 5500 | 3400 | 3400 |
| Härte bei RT | 13 A | 27 A | 72 A | 62 A | 68 D |
| Härte bei 50°C | | | 72 A | 61 A | 64 D |
| Härte bei 100°C | | | 72 A | 65 A | 55 D |
| Speichermodul [G'] aus DMA bei - 40°C | n.B. | n.B. | n.B. | n.B. | 570 |
| E-modul berechnet aus DMA bei -40°C | n.B. | n.B. | n.B. | n.B. | 1600 |
| Speichermodul [G'] aus DMA bei +50°C | n.B. | n.B. | n.B. | n.B. | 237 |
| E-modul berechnet aus DMA bei +50°C | n.B. | n.B. | n.B. | n.B. | 660 |

| | | | | | |
|---|---|---|---|---|---|
| n.B. = nicht bestimmt, da Shorehärte des Materials bei Raumtemperatur (RT) zu niedrig ist | | | | | |

Wie aus Referenzbeispiel B1 ersichtlich wird ein Polyurethan mit den gewünschten Eigenschaften und einem E-modul >275 MPa im Bereich von -45° bis +50°C Z erhalten . Die in V1 bis V4 erhalten Polyurethane weisen eine niedrige Härte und dadurch ein niedriges E-modul auf, welches weit unter 275 MPa bei 50°C liegt. Durch die gezielte Kombination von einem Isocyanat (a) mit einem NCO-Gehalt von >20 Gew.-% mit einer entsprechenden Polyolmischung (b) wird ein entsprechendes Polyurethan erhalten. Dies wird in den Beispielen B2 bis B4 in Bezug auf die Vergleichsbeispiele V5 und V6 verdeutlicht.

| | B2 | B3 | B4 | V5 | V6 |
|---|---|---|---|---|---|
| Poly 4 | 63,41 | 63,41 | 63,41 | 63,41 | 63,41 |
| Poly 6 | 15,31 | 15,31 | 15,31 | 15,31 | 15,31 |
| KV 1 | 12,90 | 12,90 | 12,90 | 12,90 | 12,90 |
| KV 2 | 5,45 | 5,45 | 5,45 | 5,45 | 5,45 |
| Zeo | 2,89 | 2,89 | 2,89 | 2,89 | 2,89 |
| DF | 0,04 | 0,04 | 0,04 | 0,04 | 0,04 |
| Iso 1 | | | X | | |
| Iso 2 | X | | | | |
| Iso 3 | | X | | | |
| Iso 6 | | | | | X |
| Iso 7 | | | | X | |
| Mischungsverhältnis 100 Polyol : X Iso | 85,6 | 94,1 | 116 | 150 | 462 |
| Viskosität Polyolmischung [mPas] | 1500 | 1500 | 1500 | 1500 | 1500 |
| Härte bei RT | 69 D | 69 D | 73 D | 45 D | 60 A |
| Härte bei 50°C | 66 D | 65 D | 68 D | 27 D | 57 A |
| Härte bei 100°C | 55 D | 48 D | 52 D | 15 D | 55 A |
| Speichermodul [G'] aus DMA bei -40°C [MPa] | 726 | 904 | 1219 | 990 | 85 |
| E-modul berechnet aus DMA bei -40°C [MPa] | 2030 | 2530 | 3400 | 2770 | 238 |
| Speichermodul [G'] aus DMA bei +50°C [MPa] | 302 | 213 | 237 | 7,2 | 2,5 |
| E-modul berechnet aus DMA bei +50°C [MPa] | 840 | 600 | 660 | 20 | 7 |

## Patentansprüche

1. Verbundelement mit folgender Schichtstruktur:
(i) 2 mm bis 20 mm Metall,
(ii) 10 mm bis 100 mm kompakte Polyurethanzubereitung, wobei die Polyurethanzubereitung erhältlich ist durch Umsetzung von
(a) einer mindestens zwei Isocyanatgruppen aufweisenden Verbindung mit
(b) Polyetherpolyol,
gegebenenfalls in Gegenwart von
(c) Katalysator und/oder
(d) Hilfs- und/oder Zusatzstoffen,
(e) Kettenverlängerer
(iii) 2 mm bis 20 mm Metall.
wobei die Isocyanatgruppen enthaltende Verbindung a) einen NCO-Gehalt von 20 % bis 50% aufweist und das Polyetherpolyol (b) eine Mischung ist, die zumindest die Bestandteile Polyetherpolyol (b1) und Polyetherpolyol (b2) enthält
wobei das Polyetherpolyol (b1) ein zahlenmittleres Molekulargewicht zwischen 3,0 × 10³ g/Mol und 7,0 × 10³ g/Mol und eine mittlere Funktionalität von 2,2 bis 2,7aufweist, das Polyetherpolyol (b2) ein zahlenmittleres Molekulargewicht zwischen 0,15 × 10³ g/Mol und 2,0 × 10³ g/Mol und eine mittlere Funktionalität von 2,5 bis 3,5 aufweist,
das Polyetherpolyol (b1) mit 50 Gew.-% bis 95 Gew.-% in der Mischung enthalten ist und das Polyetherpolyol (b2) mit 5 Gew.-% bis 50 Gew.-% in der Mischung enthalten ist.

2. Verbundelement nach einem der vorhergehenden Ansprüche, wobei das Polyetherpolyol (b1) eine mittlere Funktionalität von 2,4 bis 2,6 aufweist.

3. Verbundelement nach einem der vorhergehenden Ansprüche, wobei das Polyetherpolyol (b2) eine mittlere Funktionalität von 2,9 bis 3,1 aufweist.

4. Verbundelement nach einem der vorhergehenden Ansprüche, wobei sich die Gewichtsangaben der Polyetherpolyole (b1) beziehungsweise (b2) auf das Gesamtgewicht der Mischung bestehend aus dem Polyetherpolyol (b1) und (b2) beziehen.

5. Verbundelement nach einem der vorhergehenden Ansprüche, wobei die Differenz des zahlenmittleren Molekulargewichts der Polyetherpolyole (b1) und (b2) zumindest 0,5 × 10³ g/Mol, bevorzugt zumindest 1,0 × 10³ g/Mol, weiter bevorzugt zumindest 2,0 × 10³ g/Mol, und besonders bevorzugt zumindest 3,5 × 10³ g/Mol beträgt.

6. Verbundelement nach einem der vorhergehenden Ansprüche, wobei ein Kettenverlängerer enthalten ist.

7. Verbundelement nach dem vorhergehenden Anspruch, wobei der Kettenverlängerer eine Mischung aus Diolen mit 2 bis 8 Kohlenstoffatomen enthält, bevorzugt mit 4 bis 6 Kohlenstoffatomen, besonders bevorzugt enthält der Kettenverlängerer Dipropylenglykol und Butandiol.

8. Verbundelement nach einem der vorhergehenden Ansprüche, wobei die Isocyanatgruppen aufweisende Verbindung das Isocyanat 2,4'-, 2,2'- und/oder 4,4'-Diphenylmethandiisocyanat (MDI) und/oder Polyphenylpolymethlyen-polyisocyanat enthält, besonders bevorzugt Polyphenylpolymethlyen-polyisocyanat.

9. Verbundelement nach einem der vorhergehenden Ansprüche, wobei das Polyurethan eine Härte von mehr als 45 Shore D, bevorzugt von mehr als 55 Shore D aufweist, gemessen nach DIN 53505.

10. Verfahren zur Herstellung von Verbundelementen nach einem der vorhergehenden Ansprüche, **dadurch gekennzeichnet, dass** man
(a) die mindestens zwei Isocyanatgruppen enthaltende Verbindung mit
(b) Polyetherpolyol, wobei das Polyetherpolyol (b) eine Mischung ist, die zumindest die Bestandteile Polyetherpolyol (b1) und Polyetherpolyol (b2) enthält,
gegebenenfalls in Gegenwart von
(c) Katalysator und/oder
(d) Hilfs- und/oder Zusatzstoffen und/oder
(e) Kettenverlängerer vermischt und in Kontakt mit den Metallschichten aushärten lässt.

11. Verfahren nach dem vorhergehenden Anspruch, wobei die Isocyanatgruppen enthaltende Verbindung a) einen NCO-Gehalt von 20 % bis 40 %, bevorzugt von 20 % bis 35 % und besonders bevorzugt von 20 % bis 32 % aufweist.

12. Verfahren nach einem der vorherigen Ansprüche, wobei die Mischung ggf. enthaltend (c) Katalysator, (d) Hilf- und/oder Zusatzstoffe und/oder Kettenverlängerer (e) eine Viskosität von weniger als 6,0 × 10³ mPas, bevorzugt weniger als 5,0 × 10³ mPas und besonders bevorzugt von weniger als 4,0 × 10³ mPas besitzt, gemessen nach DIN 53019-1 bei 23°C.

13. Verfahren nach dem vorherigen Anspruch, wobei die Isocyanatgruppen enthaltende Verbindung (a) das Additionsprodukt aus Diisocyanat und einem Polyol mit einem Molekulargewicht von 0,076 bis 2 × 10³ g/mol ist

14. Verwendung von Verbundelementen nach einem der Ansprüche 1 bis 9 in Fahrzeugen, Schiffen, Flugzeugen oder in Bauwerken.

15. Fahrzeuge, Schiffe, Flugzeuge, oder Bauwerke enthaltend Verbundelemente nach einem der Ansprüche 1 bis 9 .

## Claims

1. A composite element having the following layer structure:
(i) 2 mm to 20 mm of metal,
(ii) 10 mm to 100 mm of compact polyurethane formulation, said polyurethane formulation being obtainable by reacting
(a) a compound having at least two isocyanate groups with
(b) polyether polyol,
optionally in the presence of
(c) catalyst and/or
(d) auxiliaries and/or additives,
(e) chain extenders
(iii) 2 mm to 20 mm of metal,
where the compound a) comprising isocyanate groups has an NCO content of 20% to 50% and the polyether polyol (b) is a mixture comprising at least the constituents of polyether polyol (b1) and polyether polyol (b2),
wherein the polyether polyol (b1) has a number-average molecular weight between 3.0 × 10³ g/mol and 7.0 × 10³ g/mol and an average functionality of 2.2 to 2.7,
the polyether polyol (b2) has a number-average molecular weight between 0.15 × 10³ g/mol and 2.0 × 10³ g/mol and an average functionality of 2.5 to 3.5,
the polyether polyol (b1) is present in the mixture at 50% by weight to 95% by weight and the polyether polyol (b2) is present in the mixture at 5% by weight to 50% by weight.

2. The composite element according to either of the preceding claims, wherein the polyether polyol (b1) has an average functionality of 2.4 to 2.6.

3. The composite element according to any of the preceding claims, wherein the polyether polyol (b2) has an average functionality of 2.9 to 3.1.

4. The composite element according to any of the preceding claims, wherein the weight figures for the polyether polyols (b1) and (b2) are based on the total weight of the mixture consisting of the polyether polyol (b1) and (b2).

5. The composite element according to any of the preceding claims, wherein the difference in the number-average molecular weight of the polyether polyols (b1) and (b2) is at least 0.5 × 10³ g/mol, preferably at least 1.0 × 10³ g/mol, further preferably at least 2.0 × 10³ g/mol, and especially preferably at least 3.5 × 10³ g/mol.

6. The composite element according to any of the preceding claims, wherein a chain extender is present.

7. The composite element according to the preceding claim, wherein the chain extender comprises a mixture of diols having 2 to 8 carbon atoms, preferably having 4 to 6 carbon atoms, and the chain extender especially preferably comprises dipropylene glycol and butanediol.

8. The composite element according to any of the preceding claims, wherein the compound having isocyanate groups comprises the isocyanate diphenylmethane 2,4'-, 2,2'- and/or 4,4'-diisocyanate (MDI) and/or polyphenylpolymethylene polyisocyanate, more preferably polyphenylpolymethylene polyisocyanate.

9. The composite element according to any of the preceding claims, wherein the polyurethane has a hardness of more than 45 Shore D, preferably of more than 55 Shore D, measured to DIN 53505.

10. A process for producing composite elements according to any of the preceding claims, which comprises mixing
(a) the compound comprising at least two isocyanate groups with
(b) polyether polyol, where the polyether polyol
(b) is a mixture comprising at least the constituents of polyether polyol (b1) and polyether polyol (b2),
optionally in the presence of
(c) catalyst and/or
(d) auxiliaries and/or additives and/or
(e) chain extenders and allowing the mixture to cure in contact with the metal layers.

11. The process according to the preceding claim, wherein the compound a) comprising isocyanate groups has an NCO content of 20% to 40%, preferably of 20% to 35% and more preferably of 20% to 32%.

12. The process according to any of the preceding claims, wherein the mixture optionally comprising (c) catalyst, (d) auxiliaries and/or additives and/or chain extenders (e) has a viscosity of less than 6.0 × 10³ mPas, preferably less than 5.0 × 10³ mPas and more preferably less than 4.0 × 10³ mPas, measured to DIN 53019-1 at 23°C.

13. The process according to the preceding claim, wherein the compound (a) comprising isocyanate groups is the addition product of diisocyanate and a polyol having a molecular weight of 0.076 to 2 × 10³ g/mol.

14. The use of composite elements according to any of claims 1 to 9 in vehicles, ships, aircraft or built structures.

15. A vehicle, ship, aircraft or built structure comprising composite elements according to any of claims 1 to 9.

## Revendications

1. Élément composite présentant la structure de couches suivante :
(i) 2 à 20 mm de métal,
(ii) 10 mm à 100 mm de composition compacte de polyuréthane, la composition de polyuréthane pouvant être obtenue par transformation de
(a) un composé présentant au moins deux groupes isocyanate avec
(b) du polyétherpolyol,
le cas échéant en présence de
(c) un catalyseur et/ou
(d) des adjuvants et/ou des additifs,
(e) des agents d'allongement de chaîne,
(iii) 2 à 20 mm de métal,
le composé contenant des groupes isocyanate a) présentant une teneur en NCO de 20% à 50% et le polyétherpolyol (b) étant un mélange qui contient au moins les constituants polyétherpolyol (b1) et polyétherpolyol (b2)
le polyétherpolyol (b1) présentant un poids moléculaire moyen en nombre entre 3,0 × 10³ g/mole et 7,0 × 10³ g/mole et une fonctionnalité moyenne de 2,2 à 2,7, le polyétherpolyol (b2) présentant un poids moléculaire moyen en nombre entre 0,15 × 10³ g/mole et 2,0 × 10³ g/mole et une fonctionnalité moyenne de 2,5 à 3,5,
le polyétherpolyol (b1) étant contenu à raison de 50% en poids à 95% en poids dans le mélange et le polyétherpolyol (b2) étant contenu à raison de 5% en poids à 50% en poids dans le mélange.

2. Élément composite selon l'une quelconque des revendications précédentes, le polyétherpolyol (b1) présentant une fonctionnalité moyenne de 2,4 à 2,6.

3. Élément composite selon l'une quelconque des revendications précédentes, le polyétherpolyol (b2) présentant une fonctionnalité moyenne de 2,9 à 3,1.

4. Élément composite selon l'une quelconque des revendications précédentes, les indications de poids des polyétherpolyols (b1) ou, selon le cas, des polyétherpolyols (b2) se rapportant au poids total du mélange constitué par les polyétherpolyols (b1) et (b2).

5. Élément composite selon l'une quelconque des revendications précédentes, la différence du poids moléculaire moyen en nombre des polyétherpolyols (b1) et (b2) étant d'au moins 0,5 × 10³ g/mole, de préférence d'au moins 1,0 × 10³ g/mole, plus préférablement d'au moins 2,0 × 10³ g/mole et de manière particulièrement préférée d'au moins 3,5 × 10³ g/mole.

6. Élément composite selon l'une quelconque des revendications précédentes, un agent d'allongement de chaîne étant contenu.

7. Élément composite selon la revendication précédente, l'agent d'allongement de chaîne contenant un mélange de diols présentant 2 à 8 atomes de carbone, de préférence 4 à 6 atomes de carbone, l'agent d'allongement de chaîne contenant de manière particulièrement préférée du dipropylèneglycol et du butanediol.

8. Élément composite selon l'une quelconque des revendications précédentes, le composé présentant des groupes isocyanate contenant l'isocyanate diisocyanate de 2,4'-diphénylméthane, de 2,2'-diphénylméthane et/ou de 4,4'-diphénylméthane (MDI) et/ou le polyisocyanate de polyphénylpolyméthylène, de manière particulièrement préférée le polyisocyanate de polyphénylpolyméthylène.

9. Élément composite selon l'une quelconque des revendications précédentes, le polyuréthane présentant une dureté supérieure à 45 Shore D, de préférence supérieure à 55 Shore D, mesurée selon la norme DIN 53505.

10. Procédé pour la fabrication d'éléments composites selon l'une quelconque des revendications précédentes, **caractérisé en ce qu'**on mélange
(a) le composé contenant au moins deux groupes isocyanate avec
(b) du polyétherpolyol, le polyétherpolyol(b) étant un mélange qui contient au moins les constituants polyétherpolyol (b1) et polyétherpolyol (b2), le cas échéant en présence de
(c) un catalyseur et/ou
(d) des adjuvants et/ou des additifs et/ou
(e) des agents d'allongement de chaîne
et on laisse durcir en contact avec les couches métalliques.

11. Procédé selon la revendication précédente, le composé contenant des groupes isocyanate a) présentant une teneur en NCO 20% à 40%, de préférence de 20% à 35% et de manière particulièrement préférée de 20% à 32%.

12. Procédé selon l'une quelconque des revendications précédentes, le mélange contenant le cas échéant (c) un catalyseur, (d) des adjuvants et/ou des additifs et/ou (e) des agents d'allongement de chaîne présentant une viscosité inférieure à 6,0 × 10³ mPa.s, de préférence inférieure à 5,0 × 10³ mPa.s et de manière particulièrement préférée inférieure à 4,0 × 10³ mPa.s, mesurée selon la norme DIN 53019-1 à 23°C.

13. Procédé selon la revendication précédente, le composé contenant des groupes isocyanate (a) étant le produit d'addition de diisocyanate et d'un polyol présentant un poids moléculaire de 0,076 à 2 × 10³ g/mole.

14. Utilisation d'éléments composites selon l'une quelconque des revendications 1 à 9 dans des véhicules, des bateaux, des avions ou dans des constructions.

15. Véhicules, bateaux, avions ou constructions contenant des éléments composites selon l'une quelconque des revendications 1 à 9.
